# EUROPÄISCHE PATENTSCHRIFT

(11) **EP 1 962 024 B1**
(45) Veröffentlichungstag und Bekanntmachung des Hinweises auf die Patenterteilung: **22.12.2010**
(21) Anmeldenummer: 08001685.0
(22) Anmeldetag: 30.01.2008
(51) Int. Cl.: F24D 11/02, F24D 3/08, F24D 11/00, F24D 19/10, F28D 20/00

(54) **Auf Basis erneuerbarer Energieträger arbeitendes Warmwasser-und Heizungssystem**
Hot water heating sytem and central heating system using renewable energy sources
Installation de chauffage à eau chaude et installation de chauffage central utilisant des sources énergétiques renouvelables

(30) Priorität: 26.02.2007 DE 102007009196
(43) Veröffentlichungstag der Anmeldung: 27.08.2008
(60) Teilanmeldung: 10008583.6
(73) Patentinhaber: KIOTO Clear Energy AG, 9300 St. Veit an der Glan (AT)
(72) Erfinder: Berger, Erwin, 7000 Eisenstadt (AT); Eusch, Ingram, 9500 Villach (AT); Kreiner, Thomas, 2443 Loretto (AT); Stricker, Erwin, 2443 Loretto (AT); Pavicsics, Reinhard, 2443 Leithaprodersdorf (AT)
(74) Vertreter: Becker, Thomas

(56) Entgegenhaltungen:
- EP-A- 0 041 272
- DE-A1- 10 300 427
- FR-A- 2 505 990
- US-A- 4 598 694

## Beschreibung

Die Erfindung betrifft ein Warmwasser- und Heizungssystem welches auf Basis erneuerbarer Energieträger arbeitet. Aus wirtschaftlichen und politischen Gründen wird die Bedeutung erneuerbarer Energien immer größer. Die Gewinnung von Energie aus Sonne, Luft oder Erdwärme ist in verschiedenen Ausführungsformen bekannt. Dies gilt auch für Kombinationen der Systeme untereinander.

Im Bereich des Wohnungsbaus, aber auch bei Büros oder Gewerbebauten geht es insbesondere darum, Warmwasser für Heizkreise und/oder zur Erwärmung von Frischwasser aufzubereiten.

In diesem Zusammenhang stellt die kontinuierliche Energieversorgung ein erhebliches Problem dar. Im Sommer steht Sonnenenergie nahezu grenzenlos zur Verfügung; im Sommer besteht aber auch der geringste Bedarf an Warmwasser zum Heizen beziehungsweise zum Erwärmen von Frischwasser.

In Übergangszeiten, wie im Herbst, sowie im Winter, erhöht sich dieser Bedarf. Bei bewölktem Himmel und relativ niedrigen Außentemperaturen lassen sich beispielsweise über Sonnenkollektoren kaum nennenswerte Energiebeiträge leisten.

Die DE 103 00 427 A1 beschreibt ein Solarsystem mit Wärmepumpe. Das System umfasst: Primärenergie-Wärmetauscher, nämlich Sonnenwärmetauscher und Luftwärmetauscher, mit zugehörigen Zufuhr- und Rückführ-Leitungen. Die erwärmte Sole aus den Primärenergie-Wärmetauscher kann über einen in einem Pufferspeicher angeordneten autarken Sekundärenergie-Wärmetauscher zur Erwärmung von Wasser geführt werden. Alternativ wird die erwärmte Sole über ein Umschaltventil über einen als Sekundärenergie-Wärmetauscher ausgebildeten Verdampfer einer Wärmepumpe zur Wärmeübertragung auf eine Kältemittel geführt.

In der EP 0 041 272 A1 und FR 2 505 990 werden Systeme zur Erwärmung von Sanitärluft mittels Solarthermie und Erdwärme beschrieben. Die US 4,598,694 offenbart eine Bauform eines Pufferspeichers für Wasser.

Mit der Erfindung soll ein Warmwasser- und Heizungssystem zur Verfügung gestellt werden, welches weitestgehend wetterunabhängig eine ganzjährige Versorgung von Wohn-, Büro- und/oder Gewerbegebäuden erlaubt.

Zur Lösung dieser Aufgabe geht die Erfindung von folgenden Überlegungen aus:

Das System lässt sich in verschiedene Systemkreise gliedern. Ein so genannter Solekreis sorgt beispielsweise für die Erwärmung eines Trägermediums wie Glykol durch einen Sonnenkollektor. Steht genügend Primärenergie (Sonne) zur Verfügung lässt sich die Sole auf Temperaturen von 60°, 100° oder mehr Grad Celsius erwärmen und direkt über einen Wärmetauscher auf Wasser übertragen.

Der Solekreislauf kann alternativ über den Verdampferteil einer Wärmepumpe geführt werden, wo die Sole beispielsweise um 5°-10° C abgekühlt werden kann. Ein Kältemittel, welches in der Wärmepumpe zirkuliert, dient im Weiteren der Erwärmung von Wasser, welches in einem isolierten Behälter gespeichert werden kann.

Solekreislauf, Kältemittelkreislauf und Wasserkreislauf werden erfindungsgemäß also verknüpft.

Das System umfasst so genannte Primärenergie-Wärmetauscher (PWT). Dazu gehören die genannten Sonnenkollektoren, Luftwärmetauscher oder Erdwärmesonden in beliebiger Zahl und Kombination. Mit diesen PWTs wird Primärenergie, wie Sonnenenergie, auf ein Wärmeträger-Medium, nachstehend Sole genannt (beispielsweise Glykol) übertragen.

Das System umfasst weiters eine Wärmepumpe, die mindestens aus einem Verdampferteil, einem Kompressor, einem Kondensatorteil und einer Entspannungseinrichtung besteht, wobei die Wärmepumpe von einem Kältemittel, wie CO₂ oder Ammoniak, durchströmt wird.

Der Verdampferteil der Wärmepumpe wird von einem Wärmetauscher gebildet werden. Dieser wird als Sekundärenergie-Wärmetauscher (SWT) bezeichnet, weil im SWT die Wärmeübertragung von der bereits im PWT erwärmten Sole auf das Kältemittel oder umgekehrt erfolgt.

Ein SWT kann auch ein Wärmetauscher sein, der einen Wärmeübergang von der Sole auf Wasser ermöglicht.

Der Kondensatorteil der Wärmepumpe bildet in dieser Terminologie einen Tertiärenergie-Wärmetauscher (TWT), da in einer dritten Stufe Wärme vom Kältemittel auf Wasser übertragen wird.

Zum System gehört ferner ein so genannter Pufferspeicher, der einer geschichteten Speicherung von Wasser für mindestens einen geschlossenen Wasserkreislauf dient. Da warmes Wasser leichter als kaltes Wasser ist, ergibt sich im Pufferspeicher ein Temperaturgefälle von oben nach unten. Durch Zwischenböden, so genannte Schicht- oder Schichtenbleche, können unterschiedliche Abschnitte (Temperaturzonen) voneinander abgegrenzt werden, wobei strömungstechnische Verbindungen zwischen den Abschnitten erlaubt sind.

Das System ist an mindestens einen Hochtemperatur-Heizkreislauf (insbesondere für Radiatoren) anschließbar. Dazu lässt sich Wasser mit einer Vorlauftemperatur von beispielsweise 50°-90° C aus dem Pufferspeicher entnehmen. Ebenso kann ein Heizkreislauf für Niedrigtemperaturen angeschlossen werden, beispielsweise für Fußbodenheizungen, die mit Vorlauftemperaturen von beispielsweise 20°-60° C arbeiten.

Das Warmwasser des Pufferspeichers kann ebenso zum Aufheizen von Frischwasser genutzt werden, beispielsweise über einen zwischengeschalteten Wärmetauscher. Dazu weist der Pufferspeicher entsprechende Zu- und Ableitungen für das Zirkulationswasser auf.

Das in den Pufferspeicher zugeführte Wasser kann entsprechend seiner Temperatur in die entsprechende Temperaturzone geführt werden.

Mindestens ein Abschnitt (eine Temperaturzone) des Pufferspeichers kann eine Zusatz-Heizung aufweisen, um bei Bedarf unabhängig von den PWTs Wasser im Pufferspeicher aufheizen zu können. Die Zusatz-Beheizung kann beispielsweise über eine konventionelle Heizungsanlage mit fossilen Brennstoffen erfolgen. Ebenso ist eine elektrische Zusatzheizung möglich.

Als SWT oder TWT eignen sich alle Arten von Wärmetauschern, insbesondere Plattenwärmetauscher.

Die einzelnen Systemkomponenten, insbesondere innerhalb der funktionalen Systemkreise (Solekreis, Kältemittelkreis, Wasserkreis) sind über geeignete Mehrwegeventile, die auch Mischventile sein können, einzeln oder in Gruppen, gegebenenfalls auch alle gleichzeitig, verbunden.

Danach betrifft die Erfindung in ihrer allgemeinsten Ausführungsform ein Warmwasser- und Heizungssystem gemäß Anspruch 1.

Der Begriff "autarker Sekundärenergie-Wärmetauscher" beschreibt einen Wärmetauscher, der nicht Bestandteil der Wärmepumpe und damit nicht Bestandteil des Kältemittelkreislaufes ist.

Erfindungsgemäß ist die Bauform aller Wärmetauscher weitestgehend beliebig. So können die Wärmetauscher im Gleichstrom oder im Gegenstrom arbeiten. Die Wärmetauscher können beispielsweise Rohrwärmetauscher, Plattenwärmetauscher, Spiralwärmetauscher und/oder Rotationswärmetauscher sein.

Der Pufferspeicher dient der Speicherung des erwärmten Wassers, aber auch der Rückführung von abgekühltem Wasser beispielsweise aus dem Heizkreislauf. Im Pufferspeicher sind unterschiedliche Temperaturzonen ausgebildet. Entsprechend wird der Zulauf von Kaltwasser unten, die Entnahme von Warmwasser für Radiatoren oben im Behälter des Pufferspeichers erfolgen.

Um die nachstehend beschriebenen Schaltzustände und Verfahrensvarianten einfacher regeln/steuern zu können, sieht die Erfindung vor, sämtliche Rücklaufleitungen der Primärenergie-Wärmetauscher über ein Mehrwegeventil zu führen. Über dieses Ventil lässt sich dann beispielsweise einstellen, ob ausschließlich der vom Luftwärmetauscher kommende Solestrom zum Verdampfer der Wärmepumpe geführt wird oder ob dieser Solestrom beispielsweise zuvor noch über den Sonnenkollektor geleitet wird.

Im letztgenannten Fall ist die Rückführleitung eines Primärenergie-Wärmetauschers strömungstechnisch mit einer Zuführleitung eines anderen Primär-Wärmetauschers verbunden.

Diese Verbindung erfolgt in dem genannten Mehrwegeventil.

Insbesondere zum Beladen des Systems, beispielsweise zum Auffüllen des Solekreislaufes mit Glykol, sieht die Erfindung vor, alle im System befindlichen und von der Sole durchströmbaren Primärenergie-Wärmetauscher und Sekundär-Wärmetauscher, einschließlich zugehöriger Zufuhr- und Rückführleitungen, strömungstechnisch gleichzeitig zu verbinden, namlich über das genannte Mehrwegeventil.

Analog lassen sich alle im System befindlichen und von dem Kältemittel durchströmbaren Sekundärenergie-Wärmetauscher und Tertiärenergie-Wärmetauscher, einschließlich zugehöriger Zuführ- und Rückführleitungen, strömungstechnisch zusammenschalten.

Auch der Wasserkreislauf, also alle im System befindlichen und von Wasser durchströmbaren autarken Sekundärenergie-Wärmetauscher und Tertiärenergie-Wärmetauscher, einschließlich zugehöriger Zuführ- und Rückführleitungen, lassen sich auf diese Weise strömungstechnisch verbinden. Dies kann beispielsweise über ein weiteres, gemeinsames Mischventil erfolgen.

Von diesem Mischventil können mehrere wasserführende Leitungen zum Pufferspeicher abgehen, die in unterschiedliche Abschnitte des Pufferspeichers münden.

Der Pufferspeicher ist Bestandteil eines geschlossenen Wasserkreislaufes, von dem mindestens eine Wasserleitung zu mindestens einem Hochtemperatur-Heizkreiskauf (beispielsweise zur Beheizung von Radiatoren) und/oder von einem darunter liegenden Abschnitt mindestens eine Wasserleitung zu mindestens einem Niedrigtemperatur-Heizkreislauf (zum Beispiel zu einer Fußbodenheizung) verlaufen kann.

Da die Temperatur des Rücklaufwassers aus dem Hochtemperatur-Heizkreislauf größer ist als die Rücklauftemperatur des Wassers, welches zur Beheizung einer Fußbodenheizung dient, wird letztere an einer Stelle in den Pufferspeicher zurückgeführt, die unterhalb des Bereiches liegt, in den die Rückführleitung aus dem Hochtemperatur-Heizkreislauf einmündet.

Zur mittelbaren Erwärmung des Wassers im Pufferspeicher kann von dieser Systematik aber auch abgewichen werden, indem beispielsweise der Rücklauf des Hochtemperaturheizkreislaufes mit einer Temperatur von angenommen 35° C in einen Kaltwasserbereich des Pufferspeichers mit angenommen 20° C eingeleitet wird, um das Wasser dort zu erwärmen.

Die Erfindung wird nachstehend anhand verschiedener Ausführungsbeispiele näher erläutert.

Dabei zeigen - in stark schematisierter Darstellung -
- Figur 1:: ein Fließbild eines erfindungsgemäßen Warmwasser- und Heizungssystems
- Figuren 2a)-f):: verschiedene Systemzustände

Das Bezugszeichen 10 charakterisiert eine Gruppe von Sonnenkollektoren, das Bezugszeichen 12 eine Gruppe von Luftwärmetauschern. Beide werden von Glykol als Wärmeträger-Medium durchströmt, wobei Zu- und Ableitungen 10a, 10b für die Sonnenkollektoren 10 beziehungsweise 12a, 12b für die Luftwärmetauscher 12 an ein Mehrwegeventil 14 angeschlossen sind.

Vom Mehrwegeventil 14 verläuft eine Leitung 16a zu einem Plattenwärmetauscher 18; die korrespondiere Rückführleitung ist mit 16b gekennzeichnet. Weiters verläuft vom Mehrwegeventil 14 eine Leitung 20a zu einem Plattenwärmetauscher 22. Die korrespondierende Rückführleitung 20b mündet in das Ventil 14 ein.

Mit dem Mehrwegeventil 14 sind ferner eine Druck- und eine Saugseite 24a, 24b einer Pumpe verbunden, um den Glykolstrom durch die Leitungen 10a, 10b, 12a, 12b, 16a, 16b, 20a, 20b fördern zu können, die gemeinsam den Glykolkreislauf (= Solekreislauf) bilden.

Der Plattenwärmetauscher 22 ist Bestandteil einer Wärmepumpe, deren zughöriger Kompressor mit 26, deren zweistufiger Kondensator mit 28 und deren Entspannungsventil mit 30 gekennzeichnet ist. Die Strömungswege innerhalb der Wärmepumpe sind durch Pfeile gekennzeichnet.

Die erste Stufe 28a des Kondensators 28 wird von einem Plattenwärmetauscher gebildet, ebenso wie die zweite Stufe 28b. Beide werden im Gegenstrom von Wasser durchströmt, welches über eine Leitung 32 aus einem Pufferspeicher 34 gepumpt wird (Pumpe 36). Innerhalb des Kondensatorteils 28a können Teilströme des erwärmten Wassers weggeführt werden, was durch die Bezugszeichen 32a, 32b symbolisiert ist, wobei diese Leitungen in ein Mischventil 38 einmünden. Im Mischventil 38 können die über die Leitungen 32a, 32b mit unterschiedlicher Temperatur einlaufenden Wasserströme direkt oder nach Vermischung über Ablaufleitungen 40a, 40b, 40c, je nach Temperatur, in unterschiedliche Zonen des Pufferspeichers 34 eingespeist werden.

Das Volumen des Pufferspeichers 34 ist durch Zwischenböden 42, 44 in Zonen aufgeteilt, die strömungstechnisch (randseitig) verbunden sind. Entsprechend befindet sich oben, im Raum 46, das Wasser mit der höchsten Temperatur, beispielsweise 60°-90°, darunter (zwischen 42 und 44) ein Speicherraum für Wasser mittlerer Temperatur von beispielsweise 30°-60° (Raum 48) und schließlich unterhalb des Zwischenbodens 44 ein Kaltwasserraum 50.

Vom Raum 46 verläuft eine Warmwasserleitung 52a zu einem im Gegenstrom arbeitenden Spiralwärmetauscher 54. Die Rückleitung in den Raum 50 des Plattenspeichers 34 trägt die Ziffer 52b. Die im Wärmetauscher 54 durchgeführten Frischwasserströme sind mit 56a, 56b gekennzeichnet.

Aus dem oberen Teil des Raums 48 verläuft eine Leitung 58a zu einem ersten Heizkreis 60, an den nicht dargestellte Radiatoren angeschlossen sind. Die Rückführleitung trägt das Bezugszeichen 58b.

Ein zweiter Heizkreislauf 62 für eine Niedrigtemperatur-Fußbodenheizung ist mit einer Zulaufleitung 64a und einer Rücklaufleitung 64b gekoppelt. Die Zuführleitung verläuft vom mittleren Teil des Raumes 48 im Pufferspeicher 34, die Rückführleitung 46b mündet in den unteren Abschnitt des Raums 48.

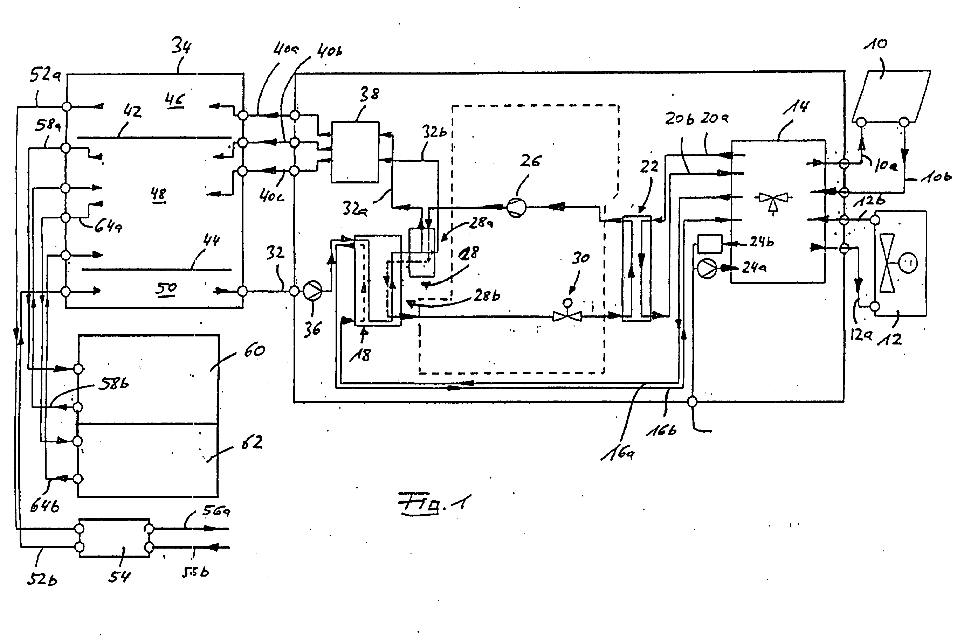

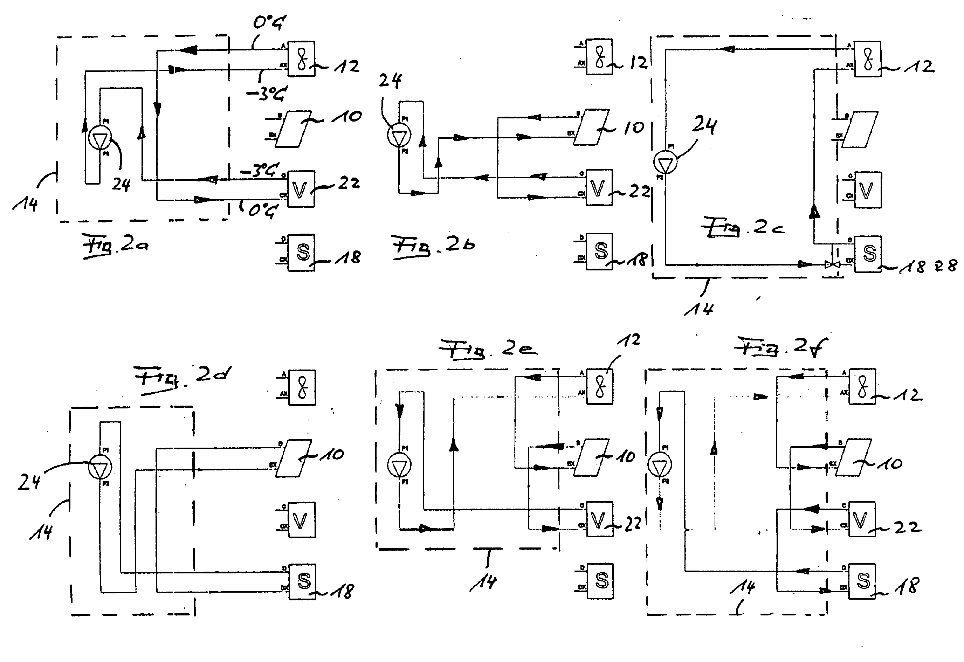

Figur 2a zeigt eine mögliche Schaltung des Systems gemäß Figur 1 im Winter bei geringen Außentemperaturen und ohne Sonnenschein.

Der Strömungsweg des Wärmeträger-Mediums (Glykol) ist durch Pfeile gekennzeichnet. An den Ein- und Ausgängen der zugehörigen Systembauteile sind beispielhafte Temperaturen für das Glykol angegeben. Bei dieser Fahrweise bleiben die Sonnenkollektoren 10 ebenso unbenutzt wie der autarke Wärmetauscher 18. Der Glykolstrom wird mit Hilfe der Pumpe 24 ausschließlich zwischen Luftwärmetauscher 12 und Verdampfer 22 geführt.

Auf der anderen Seite des Verdampfers 22 verdampft das Kältemittel; Dampf wird anschließend durch den Kompressor 26 geführt und dabei aufgewärmt. Es gelangt anschließend in den Kondensator 28, wird dort immer noch bei hohem Druck abgekühlt und schließlich kondensiert, bevor es durch das Entspannungsventil 30 geführt wird. Parallel wird Wasser im Kondensator 28 (den Plattenwärmetauschern 28a, 28b) im Gegenstrom erwärmt und über die Leitungen 32a und/oder 32b beziehungsweise 40a, b, c in den Pufferspeicher 34 geführt.

Figur 2b zeigt eine mögliche Systemeinstellung im Winter bei Sonneneinstrahlung. Es gilt die Terminologie zu Figur 2a. Anstelle des Luftwärmetauschers 12, der jetzt unbenutzt bleibt, tritt der Sonnenkollektor 10.

Im Winter kann es passieren, dass der Luftwärmetauscher 12 vereist. Für diesen Fall bietet das System die Möglichkeit der umgekehrten Fahrweise. Aus dem Pufferspeicher 34 wird Wasser über den Wärmetauscher 18 geleitet, um die Sole (Glykol) zu erwärmen, welches anschließend durch den Luftwärmetauscher 12 geführt wird und diesen abtaut. Erneut wird das Mehrwegeventil 14 zur Einstellung des gewünschten Strömungsweges genutzt (Fig. 2c).

Figur 2d zeigt die Systemführung im Sommer bei hohen Temperaturen und direkter Sonneinstrahlung. Die Wärmepumpe, die externe Energie benötigt, bleibt jetzt ungenutzt; ebenso der Luftwärmetauscher 12. Die Sonnenkollektoren 10 werden direkt an den autarken Wärmetauscher 18 angeschlossen, sodass ein direkter Wärmeübergang von der Sole (Glykol) auf das Wasser erfolgt. Die Verbindung der Kollektoren mit dem Wärmetauscher 18 wird wiederum über das Mehrwegeventil 14 gesteuert/geregelt.

Figur 2e zeigt eine alternative Fahrweise im Winter. Dabei wird der aus dem Luftwärmetauscher 12 entnommene Solestrom über das Ventil 14 in den Sonnenkollektor 10 geführt, bevor die Sole analog Figur 2b über das Ventil 14 und anschließend den Verdampfer 22 der Wärmepumpe geführt wird.

Diese Schaltung lässt sich analog im Sommer nutzen, um eine Überhitzung des Sonnenkollektors 10 zu vermeiden, wenn beispielsweise keine weitere Energiezufuhr in den Wasserspeicher benötigt wird. In diesem Betriebs-, zustand wird der Solestrom mittels des Luftwärmetauschers 12 gekühlt.

Der Solestrom kann dazu auch am Verdampfer 22 vorbei direkt vom Sonnenkollektor 10 zum Luftwärmetauscher 12 und zurück zirkuliert werden. Dazu wird eine separate Pumpe aktiviert.

In Figur 2f ist der gesamte Glykolkreislauf dargestellt, wobei alle Zuführ- und Ablaufleitungen untereinander mit Hilfe des Mehrwegeventils 14 verbunden sind. Dieser Schaltzustand dient beispielsweise dem Befüllen des Glykolkreislaufes.

## Patentansprüche

1. Auf Basis erneuerbarer Energieträger arbeitendes Warmwasser- und Heizungssystem mit Solekreis, Kältemittelkreis und Wasserkreis, mit folgenden Merkmalen:
1.1 mehreren Primärenergie-Wärmetauschern aus der Gruppe: Sonnenwärmetauscher (10), Luftwärmetauscher (12), Erdwärmetauscher zur Übertragung von Primärenergie auf eine Sole,
1.2 jeder Primärenergie-Wärmetauscher weist mindestens eine dem Transport **der** abgekühlten Sole dienende Zuführleitung (10a, 12a) und mindestens eine dem Transport der erwärmten Sole dienende Rückführleitung (10b, 12b) auf,
1.3 einem als Sekundärenergie-Wärmetauscher (22) ausgebildeten Verdampfer einer Wärmepumpe zur Wärmeübertragung von der Sole auf ein Kältemittel,
1.4 einem als Tertiärenergie-Wärmetauscher ausgebildeten Kondensator (28) der Wärmepumpe zur Wärmeübertragung vom Kältemittel auf Wasser,
1.5 einem autarken Sekundärenergie-Wärmetauscher (18) zur Wärmeübertragung von der Sole auf Wasser,
1.6 einem Pufferspeicher (34), wobei
1.7 alle im System befindlichen und von der Sole durchströmbaren Primärenergie-Wärmetauscher (10, 12) und sekundärenergie-Wärmetauscher (18, 22), einschließlich zugehöriger Zuführ- und Rückführleitungen (10a, 10b, 12a, 12b, 16a, 16b, 20a, 20b, 24a, 24b), strömungetechnisch verbindbar sind, wobei die Verbindung in einem Mehrwegeventil (34) erfolgt und den weiteren Merkmalen:
1.8 die Rückführleitungen (10b, 12b) der Primärenergie-Wärmetauseher (10, 12) sind unmittelbar oder mittelbar an den Tertiärenergie-Wärmetauscher anschließbar,
1.9 das mindestens einen antarken Sekundär- oder Tertiärenergie-Wärmetauscher (18, 28) durchströmende Wasser ist aus einem Pufferspeicher (34) in den jeweiligen Wärmetauscher und von dort unmittelbar oder mittel zurück in den Pufferspeicher (34) **transportierbar,**
1.10 vom Pufferspeicher (34) verlaufen wasserführende Leitungen (52a, 58a, 64a) zu
1.10.1 mindestens einem Heizungskreislauf (60, 62), und/oder zu
1.10.2 mindestens einem Wärmetauscher (54) zur Wärmeübertragung auf einen Frischwasserkreislauf (56a, 56b).

2. Warmwasser- und Heizungssystem nach Anspruch 1, bei dem mindestens ein Wärmetauscher als Plattenwärmetauscher gestaltet ist.

3. Warmwasser- und Heizungssystem nach Anspruch 1, dessen Pufferspeicher (34) durch horizontal verlaufende Böden (42, 44) in unterschiedliche Abschnitte (46, 48, 50) gegliedert ist.

4. Warmwasser- und Heizungssystem nach Anspruch 1, bei dem unterschiedliche Abschnitte (46, 48, 50) des Pufferspeichers (34) unterschiedliche Temperaturzonen des im Pufferspeicher (34) befindlichen Wassers bilden.

5. Warmwasser- und Heizungssystem nach Anspruch 1, bei dem alle im System befindlichen und von dem Kältemittel durchströmbaren Sekundärenergie-Wärmetauscher (22) und Tertiärenergie-Wärmetauscher (28), einschließlich zugehöriger Zuführ- und Rückführleitungen, strömungstechnisch verbindbar sind.

6. Warmwasser- und Heizungssystem nach Anspruch 1, bei dem alle im System befindlichen und von Wasser durchströmbaren Sekundärenergie-Wärmetauscher (18) und Tertiärenergie-Wärmetauscher (28) einschließlich zugehöriger Zuführ- und Rückführleitungen (32, 32a, 32b, 40a, 40b, 40c), strömungstechnisch verbindbar sind.

7. Warmwasser- und Heizungssystem nach Anspruch 6, bei dem die Verbindung der von Wasser durchströmbaren Sekundärenergie-Wärmetauscher (18) und Tertiärenergie-Wärmetauscher (28) einschließlich zugehöriger Zuführ- und Rückführleitungen (32, 32a, 32b, 40a, 40b, 40c), über ein gemeinsames Mischventil (38) erfolgt.

8. Warmwasser- und Heizungssystem nach Anspruch 3 und 7, bei dem vom Mischventil (38) mehrere wasserführende Leitungen (40a, 40b, 40c) zum Pufferspeicher (34) abgehen, die in unterschiedliche Abschnitte (46, 48) des Pufferspeichers (34) münden.

9. Warmwasser- und Heizungssystem nach Anspruch 1, bei dem von einem Abschnitt (48) des Pufferspeichers (34) mindestens eine Wasserleitung (58a) zu mindestens einem Hochtemperatur-Heizkreislauf (60) und von einem darunter liegenden Abschnitt mindestens eine Wasserleitung (64a) zu mindestens einem Niedrigtemperatur-Heizkreislauf (62) verläuft.

10. Warmwasser- und Heizungssystem nach Anspruch 9, bei dem mindestens eine Rücklaufleitung (58b) des Hochtemperatur-Heizkreislaufs (60) in einen Abschnitt (48) des Pufferspeichers (34) und mindestens eine Rücklaufleitung (64b) des Niedrigtemperatur-Heizkreislaufs (62) in einen darunter liegenden Abschnitt des Pufferspeichers (34) mündet.

## Claims

1. Hot water and heating system operating on the basis of renewable energy carriers and including a brine circuit, a refrigerant circuit and a water circuit, with the following features:
1.1 several primary energy heat exchangers from the group: solar heat exchanger (10), air heat exchanger (12), geothermal heat exchanger for transfer of primary energy to the brine,
1.2 each primary energy heat exchanger has at least one supply line (10a, 12a) used to transport a cooled brine and at least one return line (10b, 12b) used to transport the heated brine,
1.3. an evaporator of a heat pump, which evaporator is formed as a secondary energy heat exchanger (22), for transferring heat from the brine to a refrigerant,
1.4 a condenser (28) of the heat pump, which condenser is formed as a tertiary energy heat exchanger, for transferring heat from the refrigerant to water,
1.5 an autarkic secondary energy heat exchanger (18) for transferring heat from the brine to water,
1.6 a buffer tank (34), wherein
1.7 all primary energy heat exchangers (10, 12) and secondary energy heat exchangers (18, 22) within the system transporting the brine, including corresponding supply and return lines (10a, 10b, 12a, 12b, 16a, 16b, 20a, 20b, 24a, 24b) are fluidically connectable, wherein the connection is realized by a multiway valve, comprising the further features:
1.8 the return lines (10b, 12b) of the primary energy heat exchangers (10, 12) are connectable, directly or indirectly, to the tertiary energy heat exchanger,
1.9 the water flowing through at least one autarkic secondary or tertiary energy heat exchanger (18, 28) is transportable from a buffer tank (34) into the respective heat exchanger and from there directly or indirectly back into the buffer tank (34) 1.10 from the buffer tank (34) water-conducting lines (52a, 58a, 64a) run to
1.10.1 at least one heating circuit (60, 62) and/or to
1.10.2 at least one heat exchanger (54) for transferring heat to a fresh water circuit (56a, 56b).

2. Hot water and heating system according to claim 1, in which at least one heat exchanger is configured as a plate heat exchanger.

3. Hot water and heating system according to claim 1, the buffer tank (34) of which is divided into different sections (46, 48, 50) by floors (42, 44) running horizontally.

4. Hot water and heating system according to claim 1, in which different sections (46, 48, 50) of the buffer tank (34) form different temperature zones of the water in the buffer tank (34).

5. Hot water and heating system according to claim 1, in which all secondary energy heat exchangers (22) and tertiary energy heat exchangers (28) that are located in the system and through which the refrigerant can flow, including related supply and return lines, are connectable fluidically.

6. Hot water and heating system according to claim 1, in which all secondary energy heat exchangers (18) and tertiary energy heat exchangers (28) that are located in the system and through which water can flow, including related supply and return lines (32, 32a, 32b, 40a, 40b, 40c), are connectable fluidically.

7. Hot water and heating system according to claim 6, in which the connection of the secondary energy heat exchangers (18) and tertiary energy heat exchangers (28) through which water can flow, including related supply and return lines (32, 32a, 32b, 40a, 40b, 40c), is realized via a common mixing valve (38).

8. Hot water and heating system according to claim 3 and 7, in which a plurality of water-conducting lines (40a, 40b, 40c) extend from the mixing valve (38) to the buffer tank (34), which lines discharge into different sections (46, 48) of the buffer tank (34).

9. Hot water and heating system according to claim 1, in which at least one water line (58a) runs from a section (48) of the buffer tank (34) to at least one high-temperature heating circuit (60) and at least one water line (64a) runs from a section lying beneath to at least one low-temperature heating circuit (62).

10. Hot water and heating system according to claim 9, in which at least one return line (58b) of the high-temperature heating circuit (60) discharges into a section (48) of the buffer tank (34) and at least one return line (64b) of the low-temperature heating circuit (62) discharges into a section of the buffer tank (34) lying beneath.

## Revendications

1. Système à eau chaude et de chauffage travaillant à base de sources d'énergie renouvelables comprenant circuit d'eau salée, circuit de réfrigérant et circuit d'eau, présentant les caractéristiques suivantes :
1.1 plusieurs échangeurs de chaleur à énergie primaire choisis dans le groupe suivait : échangeurs de chaleur solaire (10), échangeurs de chaleur à air (12), échangeurs de chaleur géothermique pour la transmission d'énergie primaire à une eau salée,
1.2 chaque échangeur de chaleur à énergie primaire présente au moins une conduite d'alimentation (10a, 12a) servant au transport de l'eau salée refroidie et au moins une conduite retour (10b, 12b) servant au transport de l'eau salé réchauffée,
1.3 un évaporateur, conçu sous forme d'échangeur de chaleur à énergie secondaire (22), d'une pompe à chaleur pour la transmission de chaleur de l'eau salée à un réfrigérant,
1.4 un condensateur (28), conçu sous forme d'échangeur de chaleur à énergie tertiaire, de la pompe à chaleur pour la transmission de chaleur du réfrigérant à l'eau,
1.5 un échangeur de chaleur à énergie secondaire (18) indépendant pour la transmission de chaleur de l'eau salée à l'eau,
1.6 un réservoir tampon (34)
1.7 tous les échangeurs de chaleur à énergie primaire (10, 12) et échangeurs de chaleur à énergie secondaire (18, 22) se trouvant dans le système et pouvant être traversés par l'eau salée, y compris des conduites d'alimentation et retour spécifiques (10a, 10b, 12a, 12b, 16a, 16b, 20a, 20b, 24a, 24b) pouvant être reliées la liaison s'effectuant dans une vanne à plusieurs voies (34),
et les autres caractéristiques suivantes :
1.8 les conduites retour (10b, 12b) des échangeurs de chaleur à énergie primaire (10, 12) peuvent être raccordées directement ou indirectement à l'échangeur de chaleur à énergie tertiaire,
1.9 l'eau traversant au moins un échangeur de chaleur à énergie secondaire indépendant ou un échangeur de chaleur à énergie tertiaire (18, 28) peut être transportée à partir d'un réservoir tampon (34) dans l'échangeur de chaleur concerné et revient de là directement ou indirectement dans le réservoir tampon (34),
1.10 des conduites (52a, 58a, 64a) véhiculant de l'eau sont agencées à partir du réservoir tampon (34) vers
1.10.1 au moins un circuit de chauffage (60, 62), et/ou vers
1.10.2 au moins un échangeur de chaleur (54) pour la transmission de chaleur à un circuit d'eau fraîche (56a, 56b).

2. Système à eau chaude et de chauffage selon la revendication 1, sur lequel au moins un échangeur de chaleur est conçu sous forme d'échangeur de chaleur à plaques.

3. Système à eau chaude et de chauffage selon la revendication 1, dont le réservoir tampon (34) est divisé par des fonds (42, 44) agencés horizontalement en différentes parties (46, 48, 50).

4. Système à eau chaude et de chauffage selon la revendication 1, sur lequel différentes parties (46, 48, 50) du réservoir tampon (34) forment différentes zones de température de l'eau se trouvant dans le réservoir tampon (34).

5. Système à eau chaude et de chauffage selon la revendication 1, sur lequel tous les échangeurs de chaleur à énergie secondaire (22) et échangeurs de chaleur à énergie tertiaire (28) se trouvant dans le système et pouvant être traversés par le réfrigérant, y compris des conduites d'alimentation et de retour spécifiques, peuvent être reliés.

6. Système à eau chaude et de chauffage selon la revendication 1, sur lequel tous les échangeurs de chaleur à énergie secondaire (18) et échangeurs de chaleur à énergie tertiaire (28) se trouvant dans le système et pouvant être traversés par de l'eau, y compris des conduites d'alimentation et de retour spécifiques (32, 32a, 32b, 40a, 40b, 40c), peuvent être reliés.

7. Système à eau chaude et de chauffage selon la revendication 6, sur lequel la liaison des échangeurs de chaleur à énergie secondaire (18) et échangeurs de chaleur à énergie tertiaire (28) pouvant être traversés par de l'eau, y compris des conduites d'alimentation et de retour (32, 32a, 32b, 40a, 40b, 40c) spécifiques, s'effectue au moyen d'une vanne de mélange (38) commune.

8. Système à eau chaude et de chauffage selon les revendications 3 et 7, sur lequel plusieurs conduites (40a, 40b, 40c) véhiculant de l'eau vont de la vanne de mélange (38) au réservoir tampon (34), lesquelles conduites débouchent dans différentes parties (46, 48) du réservoir tampon (34).

9. Système à eau chaude et de chauffage selon la revendication 1, sur lequel au moins une conduite d'eau (58a) s'étend d'une partie (48) de la zone tampon (34) vers au moins un circuit de chauffage à haute température (60) et au moins une conduite d'eau (64a) s'étend d'une partie sous-jacente vers au moins un circuit de chauffage à basse température (62).

10. Système à eau chaude et de chauffage selon la revendication 9, sur lequel au moins une conduite retour (58b) du circuit de chauffage à haute température (60) débouche dans une partie (48) du réservoir tampon (34) et au moins une conduite retour (64b) du circuit de chauffage à basse température (62) débouche dans une partie sous-jacente du réservoir tampon (34).
